# EUROPÄISCHE PATENTSCHRIFT

(11) **EP 2 163 338 B1**
(45) Veröffentlichungstag und Bekanntmachung des Hinweises auf die Patenterteilung: **27.08.2014**
(21) Anmeldenummer: 09169897.7
(22) Anmeldetag: 10.09.2009
(51) Int. Cl.: B23K 20/12

(54) **Pressschweißeinrichtung und Pressschweißverfahren**
Pressure welding apparatus and method
Procede et appareil de soudage sous pression

(30) Priorität: 10.09.2008 DE 202008012051 U
(43) Veröffentlichungstag der Anmeldung: 17.03.2010
(73) Patentinhaber: KUKA Systems GmbH, 86165 Augsburg (DE)
(72) Erfinder: Büchler, Michael, 86179, Augsburg (DE); Fischer, Otmar, 86150, Augsburg (DE); Meyer, Harald, 86199, Augsburg (DE); Huber, Rudolf, 81245, München (DE); Schneider, Klaus, 86316, Friedberg (DE)
(74) Vertreter: Ernicke, Klaus Stefan

(56) Entgegenhaltungen:
- EP-A- 0 510 713
- DE-A1-102005 032 020
- DE-A1-102006 034 053

## Beschreibung

Die Erfindung betrifft eine Pressschweißeinrichtung und ein Pressschweißverfahren mit den Merkmalen im Oberbegriff des Verfahrens- und Vorrichtungshauptanspruchs.

Derartige Pressschweißeinrichtungen mit einer Plastifizierungs- und einer Staucheinrichtung sind aus der Praxis bekannt. Es gibt beispielsweise Reibschweißvorrichtungen, bei denen zwei Bauteile unter Druck und in einer Drehbewegung aneinander gerieben werden, wobei das Bauteilmaterial an der Verbindungsstelle plastifiziert und aufgeschmolzen wird. Mit einem Stauchhub werden die Bauteile anschließend zusätzlich und mit erhöhter Kraft zusammengepresst und miteinander verschweißt. Bei einer anderen Variante einer Pressschweißeinrichtung wird ein Lichtbogen zwischen den distanzierten Bauteilen gezündet und von elektromagnetischen Kräften mittels einer Treibeinrichtung, z.B. einer Spulenanordnung, umlaufend angetrieben. Hierbei werden die Bauteilstirnflächen aufgeschmolzen und in einem nachfolgenden Stauchhub zusammengepresst und verschweißt.

Bei Pressschweißeinrichtungen werden die Bauteile üblicherweise mit einer gemeinsamen Fluchtlinie, die auch mit der Maschinenachse fluchtet, gefügt. Bei manchen Bauteilkonfigurationen ist es jedoch erforderlich, die Fluchtlinie zu verlassen und die Bauteile mit einem Anstellwinkel miteinander zu verschweißen. Hierzu ist es bekannt, an der Spannstelle Unterlegscheiben oder dergleichen einzubauen und ein Bauteil in der Spanneinrichtung entsprechend zu verstellen. Dies erfordert jedoch einen hohen Zeit- und Vorbereitungsaufwand und bietet keine ausreichende Sicherheit und Reproduzierbarkeit. Insbesondere können Setzungen im Spannschluss zu unerwünschten Lageänderungen führen. Außerdem ist die Spannsicherheit nicht in ausreichendem Maß gegeben.

Die EP 0 510 713 A befasst sich mit den warmen Breitbandwalzen (hot strip rolling). Hierbei werden intermittierend aus der Gießerei kommende Warmbänder endlicher Länge miteinander durch Reibschweißen zu einem quasi endlosen Warmband verbunden, das vorher und anschließend kontinuierlich gewalzt wird. Zum Reibschweißen werden die Bandränder gegeneinander gedrückt und quer zur Bandebene relativ zueinander verschoben. Das Anpressen und die plastische Deformation durch Relativbewegung werden in einer einzigen Operation durchgeführt, wobei eine Anschrägung der Bandränder unterstützend wirkt.

Aus der DE 10 2005 032 020 A1 ist es bekannt, Fensterprofile in dem auf Gehrung gestoßenen Eckbereich durch Reibschweißen zu verbinden, wobei die Profilränder innerhalb der schrägen Gehrungsebene relativ zueinander bewegt und durch Reibung plastifiziert werden. Relativbewegungen quer zur Gehrungsebene und ein Stauchen sollen aus Gründen der Präzision und Maßhaltigkeit vermieden werden.

Es ist daher Aufgabe der vorliegenden Erfindung, eine verbesserte Pressschweißtechnik aufzuzeigen.

Die Erfindung löst diese Aufgabe mit den Merkmalen im Verfahrens- und Vorrichtungshauptanspruch.
Die beanspruchte maschinelle Winkelverstellung hat den Vorteil, dass die Winkeleinstellungen der Bauteile reproduzierbar sind. Außerdem können Raumwinkel mit hoher Zuverlässigkeit und Genauigkeit eingestellt werden, die Winkelanteile um verschiedene Koordinaten- oder Raumachsen aufweisen. Die beanspruchte Winkelverstellung hat außerdem den Vorteil, dass für Raumwinkel ein Eingriff an verschiedenen räumlich getrennten Stellen möglich ist, was die Einstellsicherheit erhöht.

Das Pressschweißen kann in unterschiedlicher Weise ausgeführt werden, z.B. als Reibschweißen, Schweißen mit magnetisch bewegtem Lichtbogen oder dgl. Die Winkeleinstellung wird vorzugsweise an dem zur Stauchung bewegten Bauteil vorgenommen. Beim Reibschweißen kann dabei das andere Bauteil eine definierte Bewegung ausführen und z.B. um eine feste Achse drehen.

Die Winkelverstellung weist eine oder mehrere Stellvorrichtungen und eine oder mehrere Stellachsen auf. Die Stellachsen können auf die Schweiß- oder Nahtebene der Bauteile in der letztendlichen Schweißstellung bezogen werden, wobei die beim Pressschweißen auftretenden Bauteilverkürzungen berücksichtigt werden können. Die Stellachsen können sich in einem relevanten Punkt, insbesondere dem Mittelpunkt, des Nahtbereichs bzw. der Schweißstelle schneiden. Linearversätze können dadurch verringert oder sogar vermieden werden. Die beanspruchte Pressschweißeinrichtung bietet eine hohe Schweißqualität, wobei insbesondere die vorgegebenen Abmessungen des fertigen Schweißteils bestmöglich eingehalten werden können. Hierbei lassen sich außerdem etwaige Toleranzen in der Ausgangsform und -größe der zu verschweißenden Bauteile kompensieren.

Die beanspruchte Winkelverstellung schont die Bauteile und bietet einen optimierten Spannschluss. Außerdem werden Verwindungen oder Verspannungen der Bauteile beim Einstellen der Anstellwinkel vermieden. Hierfür ist es insbesondere günstig, die Spannelemente der Spanneinrichtungen, insbesondere des Basisbauteils, gelenkig und um mindestens eine Achse beweglich zu lagern. Schrägstellungen des Bauteils können dadurch innerhalb der Spanneinrichtungen beschädigungs- und verspannungsfrei ausgeglichen werden.

Für die konstruktive Ausgestaltung der Winkelverstellung gibt es verschiedene Möglichkeiten. In den Unteransprüchen sind verschiedene Ausführungsbeispiele hierfür dargestellt.

Die beanspruchte Winkelverstellung ist für beliebige Arten von Pressschweißeinrichtungen einsetzbar. Hierbei können die konstruktiven Ausgestaltungen und Anordnungen der Plastifizierungseinrichtung und der Staucheinrichtung beliebig variieren.

Die beanspruchte Pressschweißeinrichtung hat den Vorteil, dass ihr Einsatzbereich durch die Winkelverstellung wesentlich erweitert und verbessert werden kann. Der Bauaufwand kann dabei niedrig gehalten werden. Besonders wichtig ist die Reproduzierbarkeit der Bauteileinspannungen und der Bauteilausrichtungen. Dies ist auch bei einem eventuellen Umspannen eines zentralen Bauteils oder Basisbauteils der Fall, wenn an mehreren Stellen verschiedene Anbauteile angeschweißt werden sollen und beim Umspannen die Winkelausrichtung geändert werden muss. Der bisher erforderliche Vorbereitungsaufwand wird wesentlich verringert. Durch die Reproduzierbarkeit ist auch eine bessere und vor allem dauerhafte Betriebssicherheit und Qualitätssicherung gegeben. Die beanspruchte Pressschweißeinrichtung ist dadurch besonders wirtschaftlich.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1 bis 5:: eine erste Variante einer Pressschweißeinrichtung mit einer Winkelverstellung für zwei Anstellwinkel,
- Figur 6 und 7:: eine zweite Variante einer Winkelverstellung,
- Figur 8 bis 10:: eine dritte Variante der Winkelverstellung,
- Figur 11 und 12:: eine vierte Variante der Winkelverstellung,
- Figur 13 bis 15:: schematische Darstellungen von Ausgangs- und Schweißlagen zweier Bauteile mit verschiedenen Winkelstellungen,
- Figur 16 bis 18:: zwei Varianten von Bauteilausrichtungen mit verschiedenen Anstellwinkeln und
- Figur 19:: eine schematische Darstellung eines Stauchelements mit einem Winkelausgleich.

Die Erfindung betrifft eine Pressschweißeinrichtung (1) sowie ein Pressschweißverfahren für zwei oder mehr Bauteile (4,5) mit einer Winkelverstellung (14) für die Bauteile (4,5). Die Erfindung betrifft ferner ein Verfahren zum Einstellen der Winkellage von Bauteilen (4,5).

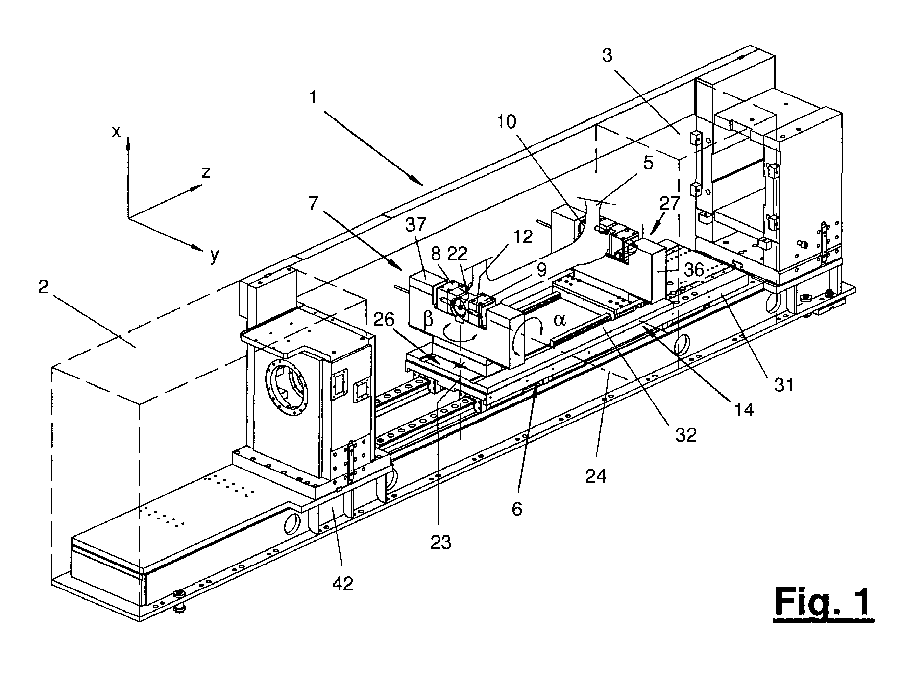

Figur 1 zeigt in einer perspektivischen Ansicht eine Pressschweißeinrichtung (1) für Bauteile (4,5), von denen nur das eine Bauteil und sog. Basisbauteil (5) zum Teil abgebrochen dargestellt ist. Die Pressschweißeinrichtung (1) weist eine Plastifizierungseinrichtung (2) und eine Staucheinrichtung (3) auf, die in unterschiedlicher Weise konstruktiv ausgebildet sein können und die in Figur 1 durch black boxes schematisch dargestellt sind.

Die Plastifizierungseinrichtung (2) und die Staucheinrichtung (3) können räumlich getrennt und an verschiedenen und insbesondere gegenüberliegenden Seiten der Bauteile (4,5) angeordnet sein, die sich dabei zwischen den Einrichtungen (2,3) befinden.

Die Plastifizierung der Bauteile (4,5) erfolgt z.B. auf rotatorischem Weg bzw. durch eine Umlaufbewegung. Dies kann z.B. durch eine gegenseitige umlaufende Drehbewegung und Reibung der Bauteile (4,5) unter Druck geschehen. Alternativ ist eine Plastifizierung durch einen umlaufenden bzw. rotierenden und magnetisch bewegten Lichtbogen möglich.

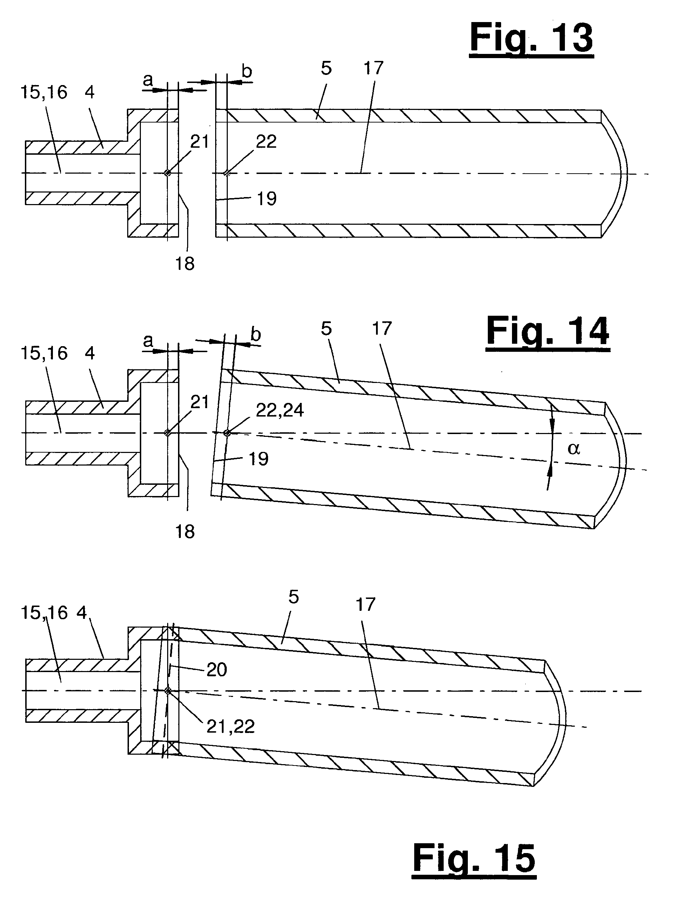

Die Plastifizierungseinrichtung (2) kann z.B. eine Reibeinrichtung aufweisen, mit der zwei Bauteile (4,5) mit ihren Kontaktflächen (18,19) in Kontakt gebracht und mit einer Drehbewegung unter Druck aneinander gerieben werden, wobei die Bauteilränder erwärmt und plastifiziert werden. Figur 13 bis 15 zeigen schematisch eine solche Anordnung. Beim Reiben kann eine erste Bauteilverkürzung eintreten. Nach einer vorgegebenen Anreibzeit bzw. eingebrachten Reibenergie kann der Stauchvorgang ausgelöst werden, wobei die Staucheinrichtung (3) z.B. das Basisbauteil (5) axial vorschiebt und gegen das Anbauteil (4) presst. Hierbei findet eine zweite Bauteilverkürzung statt.

Die Bauteile (4,5) sind jeweils in einer Spanneinrichtung (7,13) gespannt und positioniert. Die Spanneinrichtung (13) für das im gezeigten Ausführungsbeispiel rotierende Anbauteil (4) ist z.B. als Spannfutter ausgebildet und an einem Spindelstock der Plastifizierungseinrichtung (2) gelagert sowie mit einem Antriebsmotor und ggf. einer Schwungscheibe verbunden. Das Anbauteil (4) ist beim Reibschweißen z.B. in axialer Richtung festgehalten und wird vom Spannfutter (13) und dem Antrieb um die zentrale Maschinenachse (15) gedreht. Die Maschinenachse (15) kann mit der Bauteilachse (16) des Anbauteils (4) fluchten, wie z.B. in Figur 13 bis 18 dargestellt ist.

Das Anbauteil (4) kann beim Reibschweißen in seiner Winkelstellung gesteuert werden und kann am Ende seiner Drehbewegung und für den Stauchvorgang eine vorgegebene Winkellage des Drehwinkels um die Maschinenachse (15) einnehmen. Hierfür weist die Reibeinrichtung einen entsprechend steuerbaren Reibantrieb nebst einer geeigneten Maschinensteuerung auf.

Im gezeigten Ausführungsbeispiel ist die Staucheinrichtung (3) auf der gegenüber liegenden Seite der Pressschweißeinrichtung (1) angeordnet, so dass sich das Basisbauteil (5) zwischen der Plastifizierungs- und Staucheinrichtung (2,3) befindet und von der Staucheinrichtung (3) vorwärts bewegt wird. Vorzugsweise wird die nachfolgend erläuterte Winkelverstellung an dem zum Stauchen bewegten Bauteil, insbesondere dem Basisbauteil (5) vorgenommen.

Diese Anordnung kann auch in anderer Weise ausgebildet sein, wobei auch die Kinematik umgekehrt sein kann und z.B. das Anbauteil (4) mit dem Spindelstock zum Stauchen vorwärts bewegt wird. Andererseits ist es möglich, das Basisbauteil (5) alternativ oder zusätzlich zu drehen.

In einer anderen Ausführungsform der Pressschweißeinrichtung (1) kann die Plastifizierungseinrichtung (2) eine Lichtbogentreibeinrichtung aufweisen. In diesem Fall werden beide Bauteile (4,5) z.B. drehfest gehalten und auf einem axialen Abstand positioniert, wie er z.B. in Figur 13 und 14 dargestellt ist. Anschließend wird unter Anlegung einer Spannung an die Bauteile (4,5) ein Lichtbogen zwischen den Kontaktflächen (18,19) gezündet, der durch eine elektromagnetische Treibeinrichtung in Umlaufdrehung um die Bauteilränder und die Kontaktflächen (18,19) versetzt wird. Die Treibeinrichtung kann z.B. eine einteilige oder mehrteilige Spulenanordnung mit verschiedenen Einstell- und Beeinflussungsmöglichkeiten sein. Der umlaufende Lichtbogen plastifiziert die Bauteilränder, die anschließend durch die Staucheinrichtung (2) zusammengepresst und verschweißt werden. Die Winkelverstellung erfolgt auch hier vorzugsweise an dem zum Stauchen bewegten Bauteil (5).

Die Plastifizierungseinrichtung (2) weist auch in dieser Ausführungsform eine geeignete Maschinensteuerung auf. In beiden vorgenannten Ausführungsformen zum Reib- und Lichtbogenschweißen können die Maschinensteuerung Schweißprogramme beinhalten und abarbeiten.

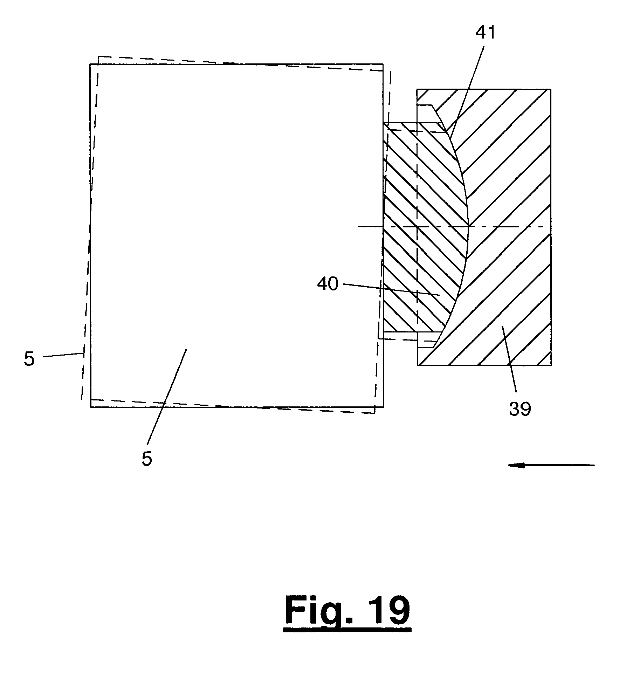

Das Basisbauteil (5) ist auf einem Bauteilhalter (6) angeordnet und mit der Spanneinrichtung (7) gespannt. Die Pressschweißeinrichtung (1) weist ein Maschinengestell (42) auf, an dem der Bauteilhalter (6) starr oder beweglich gelagert ist. In der gezeigten Ausführungsform weist der Bauteilhalter (6) einen auf dem Gestell (42) verfahrbaren Schlitten (31) mit einem geeigneten steuerbaren Antrieb (nicht dargestellt) auf, mit dem der Schlitten (31) im Zwischenraum zwischen den Einrichtungen (2,3) exakt positioniert werden kann. Anstelle eines eigenen Antriebs kann auch die Staucheinrichtung (3) mit einem ausfahrbaren Stempel oder dergleichen anderen Stauchelement (39) (vgl. Figur 19) für den Vorschub und die Axialverstellung des Schlittens (31) sorgen.

Auf dem Schlitten (31) ist eine parallele Aufbauplatte (32) starr oder beweglich angeordnet, auf der wiederum eine oder mehrere Spannerträger (36) starr oder beweglich angeordnet sind. Am Spannerträger (36) ist die Spanneinrichtung (7) angebracht. Diese besteht im gezeigten Ausführungsbeispiel aus zwei Paaren von Spannelementen (8,9 und 10,11), die in Maschinenlängsrichtung voneinander distanziert sind und die das Bauteil (5) an gegenüberliegenden Enden spannen. Die Spannelemente (8,9,10,11) können z.B. als Spannbacken bzw. Backenpaare ausgebildet sein. Die Spannelemente (8,9,10,11) werden einzeln oder paarweise von einem Spannerantrieb (37) beaufschlagt und in eine reproduzierbare Spannstellung gebracht, in der sie das Bauteil (5) in einer definierten Position spannen. Andererseits werden die Spannelemente (8,9,10,11) zum Besowie Entladen in Rückzugstellung gegenüber dem Bauteil (5) gebracht.

Die Bauteile (4,5) können von beliebiger Art, Form und Größe sein. Sie bestehen aus einem für das Pressschweißen geeigneten Werkstoff, der z.B. metallisch sein kann. Die Bauteile (4,5) können aus unterschiedlichen Werkstoffen bestehen. Sie können massiv oder zumindest bereichsweise hohl ausgebildet sein. Im gezeigten Ausführungsbeispiel sind zumindest die Kontaktflächen (18,19) ringförmig ausgebildet, wobei sie einen kreisrunden, ovalen oder prismatischen Querschnitt haben können.

In einfachen Ausführungsformen gemäß Figur 13 können die Bauteile (4,5) mit ihren Bauteilachsen (16,17) fluchtend zueinander ausgerichtet sein und miteinander durch Pressschweißen gefügt werden. Die Bauteilachsen (16,17) können dabei mit der Maschinenachse (15) zusammenfallen.

Die Erfindung befasst sich mit der Problematik, die entsteht, wenn die Bauteilachsen (16,17) an der Schweißstelle und den Kontaktflächen (18,19) nicht miteinander fluchten, sondern einen von 180° abweichenden Winkel miteinander einschließen. Dieser Winkel kann räumlicher Natur sein und bezogen auf das in Figur 1 gezeigte maschineneigene Koordinatensystem Winkelkomponenten um eine oder mehrere der Achsen x, y, z aufweisen. Die z-Achse ist im gezeigten Ausführungsbeispiel zugleich die Maschinenachse (15).

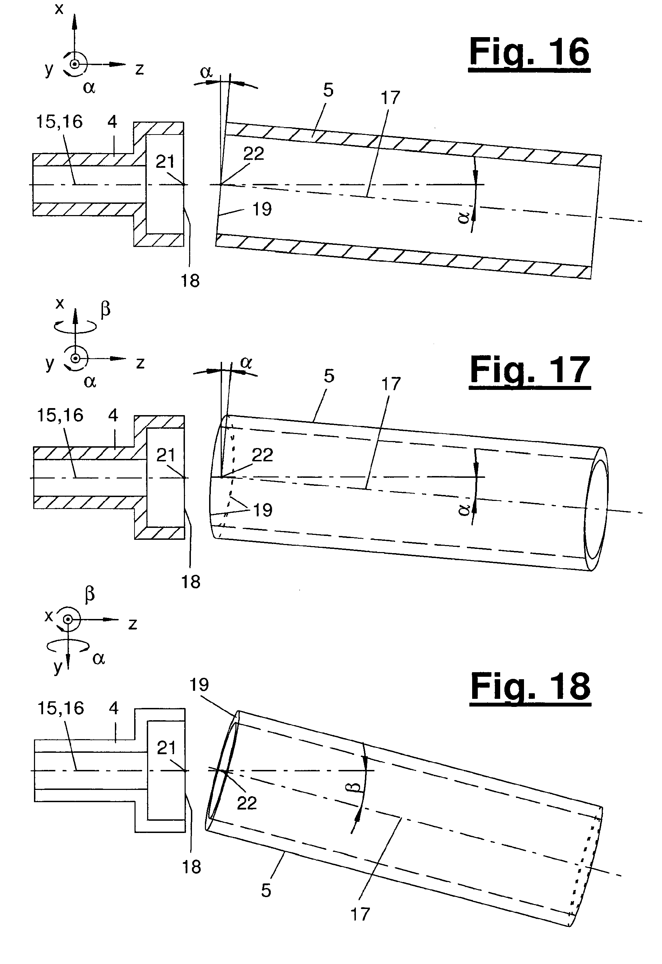

Figur 16 zeigt in einer ersten Variante die Schrägstellung zwischen den Bauteilen (4,5), wobei z.B. das Basisbauteil (5) um die quer liegende Horizontalachse y um einen Anstellwinkel α gekippt ist. Diese Konfiguration ist auch in Figur 14 und 15 zu sehen.

Figur 17 und die zugehörige geklappte Darstellung von Figur 18 zeigen eine andere Variante, bei der z.B. das Anbauteil (5) um den vorerwähnten Anstellwinkel α um die y-Achse und zusätzlich noch um einen seitlichen Anstellwinkel β um die vertikale Hochachse x gedreht ist. Hierdurch entsteht ein aus den Anstellwinkeln α,β sich zusammensetzender Raumwinkel zwischen den Bauteilen (4,5) und deren Bauteilachsen (16,17).

Derartige Winkelstellungen zwischen den Bauteilen (4,5) können in verschiedenen Konfigurationen auftreten. Beispielsweise kann das Basisbauteil (5) den Grundkörper einer Fahrzeugachse bilden, bei der beiden Enden Anbauteile (4) (nur eines ist dargestellt) als Achsstummel mit dem besagten Raumwinkel angeschweißt werden. Über den Raumwinkel bzw. seine Anstellwinkel α,β werden z.B. der Sturzwinkel und der Spurwinkel der Achse vorgegeben. Die besagten Winkellagen soll das fertige Schweißteil aufweisen.

Um ein solches Pressschweißen von Bauteilen (4,5) mit einer gegenseitig abgewinkelten räumlichen Ausrichtung zu ermöglichen, ist eine Winkelverstellung (14) vorgesehen, für die in den Ausführungsformen von Figur 1 bis 12 verschiedene Ausführungsformen dargestellt und nachfolgend beschrieben sind.

Die Winkelverstellung (14) kann komplex sein und eine direkte Einstellung des gewünschten Raumwinkels zwischen den Bauteilen (4,5) ermöglichen. Der gewünschte Raumwinkel ist in diesem Fall zugleich der räumliche Anstellwinkel.

In den gezeigten Ausführungsbeispielen wird der Raumwinkel über seine achsbezogenen Winkelkomponenten und über ein oder mehrere entsprechende Anstellwinkel α,β,γ eingestellt. Hierbei beziehen sich in der bevorzugten Ausführungsform die Anstellwinkel α,β und ggf. γ auf einen gemeinsamen Bezugspunkt (22), der den zentralen Achspunkt am Basisbauteil (5) darstellt und der am Ende des Schweißprozesses in der Schweißebene oder Nahtebene (20) liegt. Figur 15 zeigt diese Anordnung.

Wie aus Figur 13 für eine fluchtende Lage und Figur 14 für eine abgewinkelte Bauteillage hervorgeht, ergeben sich an beiden Bauteilen (4,5) durch den Pressschweißprozess Bauteilverkürzungen (a,b), die je nach Bauteilgestaltung und Bauteilwerkstoffen eine gleiche oder unterschiedliche Größe haben können. Die Bauteilverkürzungen (a,b) werden an der Schweißstelle durch eine Materialverdrängung nach außen und/oder innen durch Bildung einer Wulst aufgenommen, welche ggf. nachträglich entfernt wird. Unter Einbeziehung der Bauteilverkürzungen (a,b) ergeben sich durch die entsprechend zurückversetzten Kontaktflächen (18,19) und der Schnittstelle mit den Bauteilachsen (16,17) schweißrelevante Achspunkte (21,22) am Anbauteil (4) und Basisbauteil (5). Die Anstellwinkel α,β werden so gewählt, dass sich am Ende der Schweißung der gewünschte Raumwinkel ergibt. Die Winkelverstellung (14) wird derart ausgebildet bzw. eingestellt, dass die Achspunkte (21,22) am Ende des Schweißprozesses aufeinander zu liegen kommen und sich vorzugsweise in der Schweißebene (20) befinden oder mit geringem Abstand hierzu verlagert sind. In Figur 16 bis 18 sind die Bauteilverkürzungen (a,b) und die zugehörigen Versätze des Achspunkte (21,22) der Übersicht halber nicht dargestellt.

Die Bauteilabmessungen sind dabei entsprechend aufeinander abgestimmt, so dass unter Berücksichtigung der Bauteilverkürzungen (a,b) das fertige Schweißteil exakt die gewünschten Formen und Abmessungen hat und die Bauteile (4,5) an der Schweißstelle den gewünschten Raumwinkel zueinander einnehmen.

Figur 1 bis 5 zeigen eine erste Variante einer Pressschweißeinrichtung (1) mit einer Winkelverstellung (14), in der z.B. ein als Achsstummel ausgebildetes Anbauteil (4) schräg an ein als Achsgrundkörper ausgebildetes Basisbauteil (5) angeschweißt wird. Der Raumwinkel repräsentiert z.B. den Sturz- und Spurwinkel und teilt sich auf in einen Anstellwinkel α um die y-Achse bzw. Einstellachse (24) der Winkelverstellung (14) und einen Anstellwinkel β um die Hochachse x und eine Stellachse (23).

Bei der gezeigten Ausführungsform wird das Basisbauteil (5) über die Winkelverstellung (14) schräg gegenüber dem in seiner Spanneinrichtung (13) gehaltenen Anbauteil (4) gestellt. Wenn der zweite Achsstummel an der anderen Achsseite angeschweißt werden soll, wird das Basisbauteil (5) umgespannt und dabei ggf. in eine andere Winkellage gebracht, bei der der Raumwinkel in seiner Richtung vom Raumwinkel des zuerst angeschweißten Anbauteils (4) abweicht, wobei die Winkel im Betrag aber gleich groß sein können. Die Winkelverstellung (14) ist hierfür entsprechend variabel ausgebildet. Bei anderen Ausgestaltungen von Werkstücken und Bauteilen (4,5) können andere Vorgaben hinsichtlich der Bauteilausrichtung und der Ausbildung und Funktion der Winkelverstellung (14) bestehen.

Figur 1 verdeutlicht in der perspektivischen Darstellung die Lage der Stellachsen (23,24) und der Anstellwinkel α,β. Die Anbauteile (4) sind der Übersicht halber weggelassen. Die Stellachsen (23,24) schneiden sich idealerweise miteinander im Achspunkt (22) (vgl. Figur 14 und 15 sowie 17 und 18) des Basisbauteils (5). Dessen Spanneinrichtung (7) ist hierfür entsprechend ausgebildet und positioniert.

Die Spanneinrichtung (7) kann verstellbar sein, wobei z.B. der eine, insbesondere hintere Spannerträger (36) auf der Aufbauplatte (32) axial gegenüber dem anderen, insbesondere vorderen Spannerträger (36) mit einem steuerbaren Stellantrieb verstellt und positioniert wird.

Die Stellachsen (23,24) werden durch Lager oder Gelenke (12,33) gebildet. Die Winkelverstellung (14) weist für die genannten zwei Stellachsen (23,24) zwei getrennte Stellvorrichtungen (26,27) auf. Diese Stellvorrichtungen (26,27) weisen jeweils ein Stellelement (29) und einen manuell oder motorisch zu betätigenden Stellantrieb (30) auf. Für deren Ausgestaltung gibt es verschiedene konstruktive Möglichkeiten.

Im gezeigten Ausführungsbeispiel wird die aufrechte Stellachse (23) durch ein Lager, insbesondere ein Zapfengelenk (33) zwischen dem Schlitten (31) und der plan aufliegenden Aufbauplatte (32) gebildet. Das Gelenk (33) befindet sich an der Schlitten- und Plattenfront unterhalb der vorderen Einspannstelle des Basisbauteils (5) und ist idealerweise mit der Achse (23) fluchtend unter dem Achspunkt (22) des entsprechend eingespannten Basisbauteils (5) angeordnet. Diese Stellvorrichtung dient der seitlichen Schwenkverstellung der Aufbauplatte (32).

Der Stellantrieb (30) ist an geeigneter Schlittenposition aufgebaut und befindet sich z.B. am rückwärtigen Ende der Aufbauplatte (32). Der Stellantrieb (30) kann z.B. als Spindeltrieb ausgebildet sein, wobei ein für die reproduzierbare Spindelstellung entsprechend genau steuerbarer elektromotorischer oder sonstiger Antrieb mit der als Stellelement (29) dienenden Spindel schlittengebunden montiert ist und die Spindel mit einer an der Aufbauplatte (32) angeordneten Spindelmutter ggf. mit Selbsthemmung kämmt. Alternativ kann eine andere Arretierung der Stellposition vorhanden sein. Die Teile des Stellantriebs (30) sind dabei zum Ausgleich der Schwenkbewegungen gelenkig gelagert. Über einen Positionsgeber, z.B. Weggeber, Drehgeber oder dgl. kann die Schwenkstellung und der Anstellwinkel β exakt und reproduzierbar eingestellt werden.

In einer anderen alternativen Ausführungsform können das Stellelement (29) und der Stellantrieb (30) örtlich getrennt ausgebildet und angeordnet sein. Das Stellelement (29) kann z.B. ein Anschlag sein, welcher die Schwenkbewegungen der Aufbauplatte (32) auf der Schlittenoberseite begrenzt und in eine entsprechend genau positionierbare Aufnahme, z.B. einen Raster, am Schlitten (31) gesteckt werden kann. Der Stellantrieb (30) kann in diesem Fall ein Zylinder oder ein anderes Schub- oder Zugorgan sein, welches die Anbauplatte (32) um das Gelenk oder Lager (33) dreht und in Anlage mit dem Anschlag bringt sowie in dieser Position festhält.

In diesem wie auch in den anderen Ausführungsbeispielen kann der Stellantrieb (30) alternativ zu einem Motor, ein manuelles Betätigungsorgan, z.B. eine Kurbel, einen Hebel oder dergleichen beinhalten. Unter einem Motor wird im Sinne der Erfindung jedes maschinelle Antriebselement, z.B. auch ein pneumatischer oder auch hydraulischer Zylinder oder dergleichen verstanden.

Die andere Stellvorrichtung (27) sorgt für eine Kippverstellung des Basisbauteils (5) um die querliegende Stellachse (24). Die Stellachse (24) verläuft hierbei durch ein Gelenk (12), z.B. in Form eines Drehzapfens, mit dem die Spannelemente (8,9) sich gegenüber dem Spannerträger (36) und ggf. auch den Spannerantrieb (37) drehen können. Die Gelenkachse und die Stellachse (24) fallen idealerweise hierbei zusammen.

Der Stellantrieb (30) ist in dieser Ausführungsform am anderen rückwärtigen Spannerträger (36) angeordnet und weist eine Höhenverstellung auf, mit der die rückwärtigen Spannelemente (10,11) angehoben oder abgesenkt werden können, wodurch das mitbewegte Basisbauteil (5) eine entsprechende Kippbewegung um die Stellachse (24) ausführt.

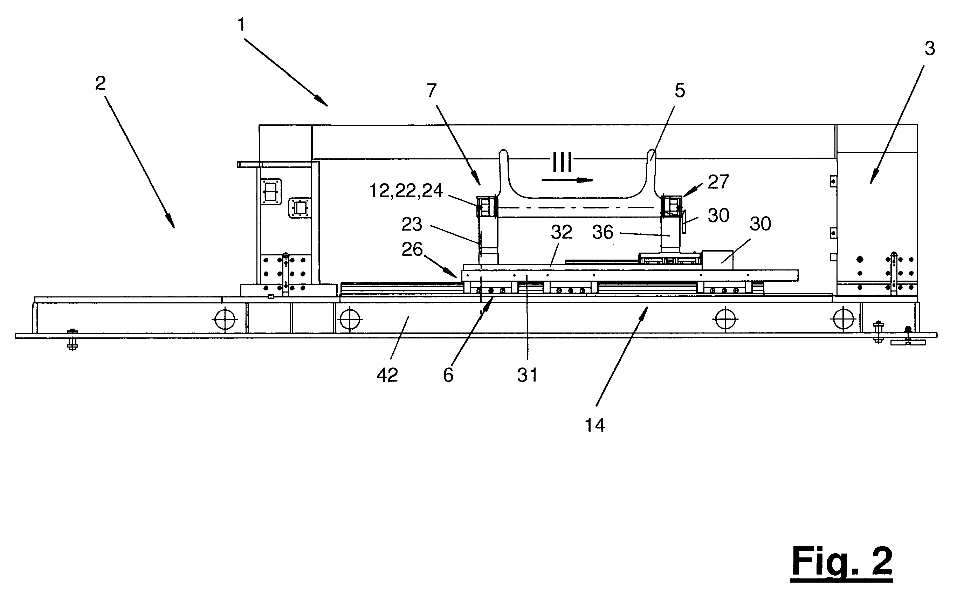

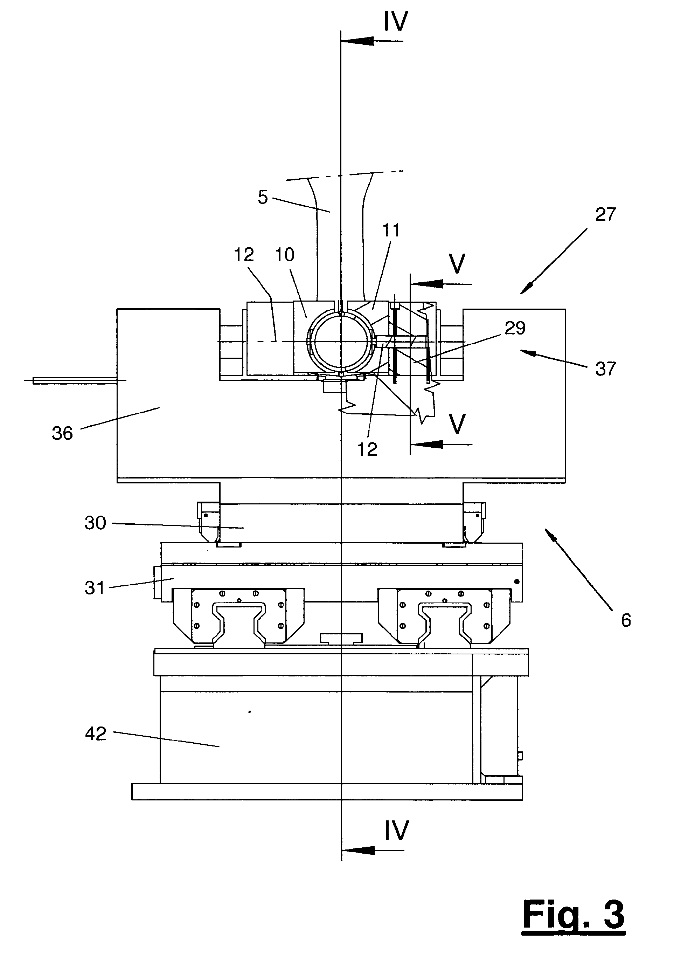

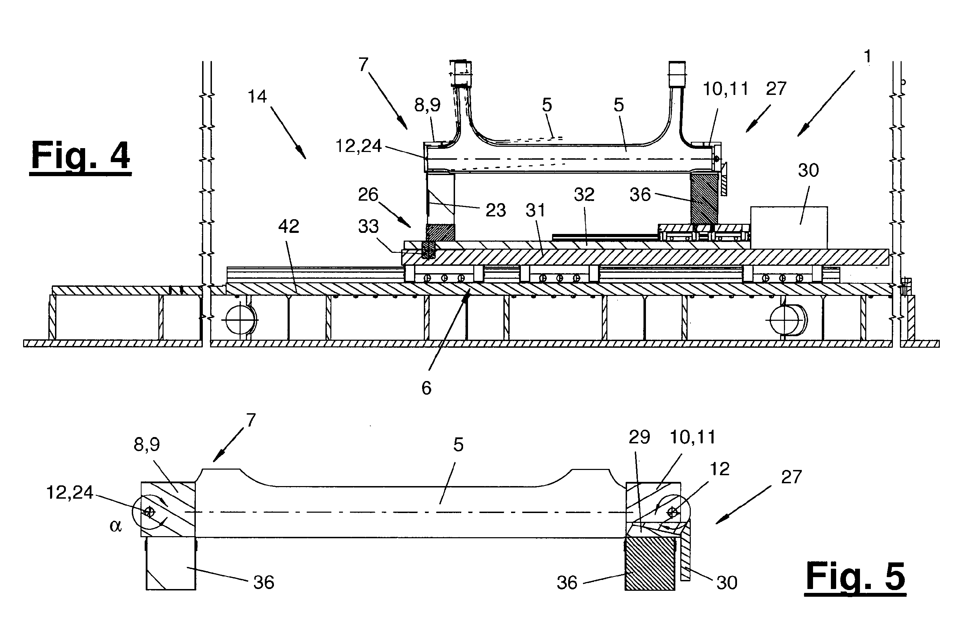

Figur 2 zeigt eine Seitenansicht der Pressschweißeinrichtung von Figur 1. In Figur 3 ist eine entsprechende Stirnansicht gemäß Pfeil III von Figur 2 zu sehen. Figur 4 und 5 geben Längsschnitte durch die Pressschweißeinrichtung (1) gemäß Schnittlinie IV-IV und durch die Spanneinrichtung (7) gemäß Schnittlinie V-V wieder.

Figur 4 zeigt im Längsschnitt das Lager oder Gelenk (33) der Stellvorrichtung (26) und die Teile der anderen Stellvorrichtung (27) für die Kippverstellung, wobei deren Einzelheiten in Figur 5 vergrößert dargestellt sind. Für die vorerwähnte Höhenverstellung ist das Stellelement (29) z.B. als Keilanordnung ausgebildet, die sich unter mindestens einem Spannelement (10,11) befindet und dieses ggf. mitsamt des Spannerantriebs (37) gegenüber dem Spannerträger (36) hebt und senkt. Der Stellantrieb (30) ist in der gezeigten Ausführungsform als manueller Bedienhebel ausgebildet, mit dem die Keile in reproduzierbarer Weise gegeneinander verschoben werden können, um die besagte Hebe- oder Senkbewegung zu erzeugen und die gewünschte Endstellung einzunehmen. Über geeignete Arretiermittel oder dergleichen kann die exakte Positionierung und die Reproduzierbarkeit erreicht werden.

Wie insbesondere Figur 5 verdeutlicht, sind auch die rückwärtigen und bei der Höhenverstellung mitbewegten Spannelemente (10,11) über Gelenke (12) schwenkbar gegenüber dem Spannerträger (36) gelagert. Der Spannschluss der Spannbacken kann dadurch beim Kippen des Basisbauteils (5) mitbewegt werden, wobei Verkantungen vermieden werden. Die Gelenkachsen fluchten hierbei und sind andererseits auch parallel zur Stellachse (24) ausgerichtet.

Durch eigenständige und getrennt steuerbare Betätigung der Stellvorrichtungen (26,27) können die Anstellwinkel α,β und somit der gewünschte Raumwinkel zwischen den Bauteilen (4,5) eingestellt werden. Die Winkel können hierbei beliebige geeignete Größen haben. Sturz- und Spurwinkel können sich z.B. im Bereich bis zu ca. 1° bewegen und ca. 0,25° bzw. 0,5° betragen.

Für andere Achsformen oder andere Arten von Werkstücken oder Bauteilen (4,5) sind auch beliebige andere Winkel möglich. Je nach Bauteilen (4,5) und gewünschter Schräglage kann der Raumwinkel auch mit nur einem der Anstellwinkel α,β zusammenfallen. Die gezeigte Winkelverstellung (14) eignet sich allerdings besonders für kleinere Winkel bis ca. 10°.

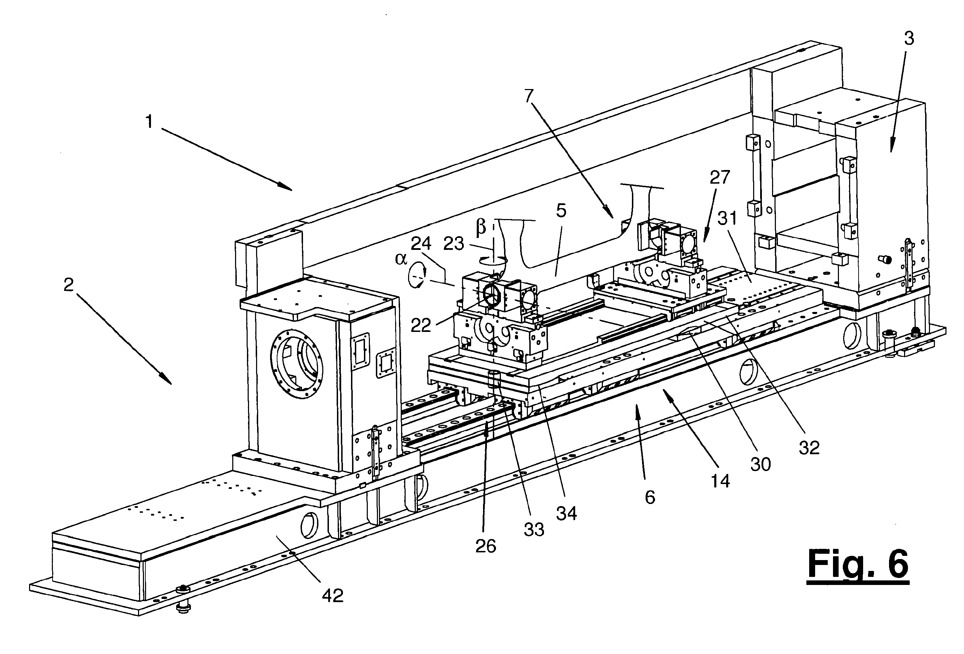

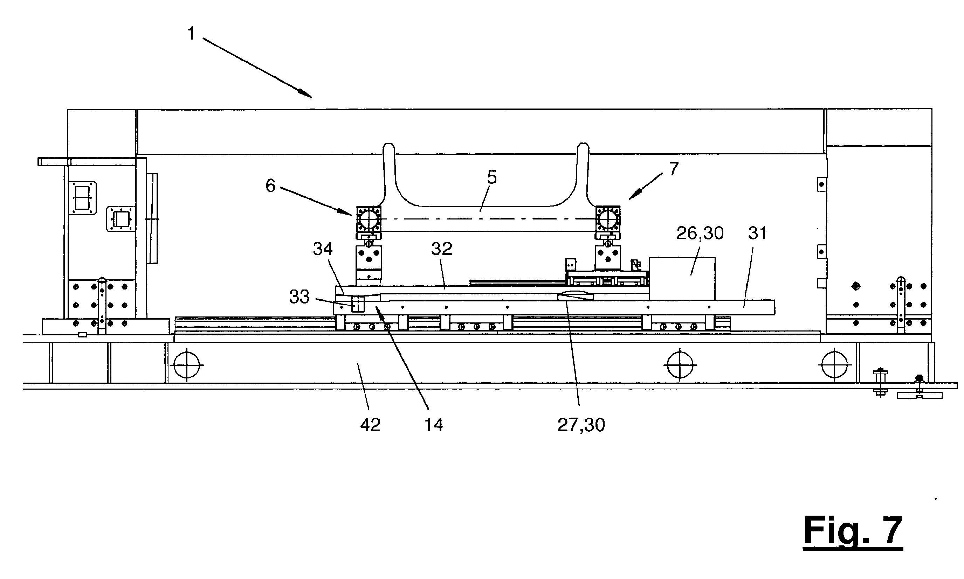

Figur 6 und 7 zeigen eine zweite Variante der Winkelverstellung (14). Die Pressschweißeinrichtung (1) und der Bauteilträger (6) sind hierbei im wesentlichen wie im ersten Ausführungsbeispiel von Figur 1 bis 5 ausgebildet. Im Unterschied zum ersten Ausführungsbeispiel ist die Stellvorrichtung (27) für die Kippverstellung des Basisbauteils (5) am Schlitten (31) angeordnet. Die Aufbauplatte (32) ist in diesem Fall über zwei Gelenke (33,34) um sich kreuzende vertikale und horizontale Stellachsen (23,24) gegenüber dem Schlitten (31) schwenkbar. Das erste Gelenk (33) ist wie im ersten Ausführungsbeispiel als Gelenkzapfen mit der vertikalen Stellachse (23) ausgebildet. Im zweiten Ausführungsbeispiel hat die Aufbauplatte (32) ein Fußteil, welches mit dem Gelenk (33) verbunden ist und eine seitliche Schwenkbewegung der Aufbauplatte (32) ermöglicht. Das zweite Gelenk (34) ermöglicht das Kippen der Aufbauplatte (32) gegenüber dem Schlitten (31) um die Stellachse (24) durch das Bauteil (5) und idealerweise durch den Achs- und Schnittpunkt (22). Das zweite Gelenk (34) ist hierzu z.B. als entsprechend um die Stellachse (24) gekrümmtes Schalenlager zwischen dem Fußteil und dem Oberteil der Aufbauplatte (32) ausgebildet.

Der Stellantrieb (30) für die Aufbauplatte (32) und die Stellvorrichtung (26) kann in der gleichen oder ähnlichen Weise wie im ersten Ausführungsbeispiel ausgebildet sein. Der Stellantrieb (30) für die zweite Stellvorrichtung (27) und die Kippverstellung ist am rückwärtigen Plattenende zwischen der Aufbauplatte (32) und dem Schlitten (31) angeordnet. Dieser Stellantrieb (30) kann bei der seitlichen Schwenkbewegung um die Stellachse (23) mitbewegt werden. Er ist als Hubantrieb ausgebildet und kann die Aufbauplatte (32) um die querliegende Stellachse (24) heben und senken. Bei dieser Kippbewegung wird das Basisbauteil (5) mit seiner Spanneinrichtung (7) mitbewegt. Bei dieser Ausführungsform kann die Spanneinrichtung (7) in konventioneller Weise ausgebildet sein und braucht nicht die Gelenke (12) des ersten Ausführungsbeispiels, obwohl diese alternativ vorhanden sein können.

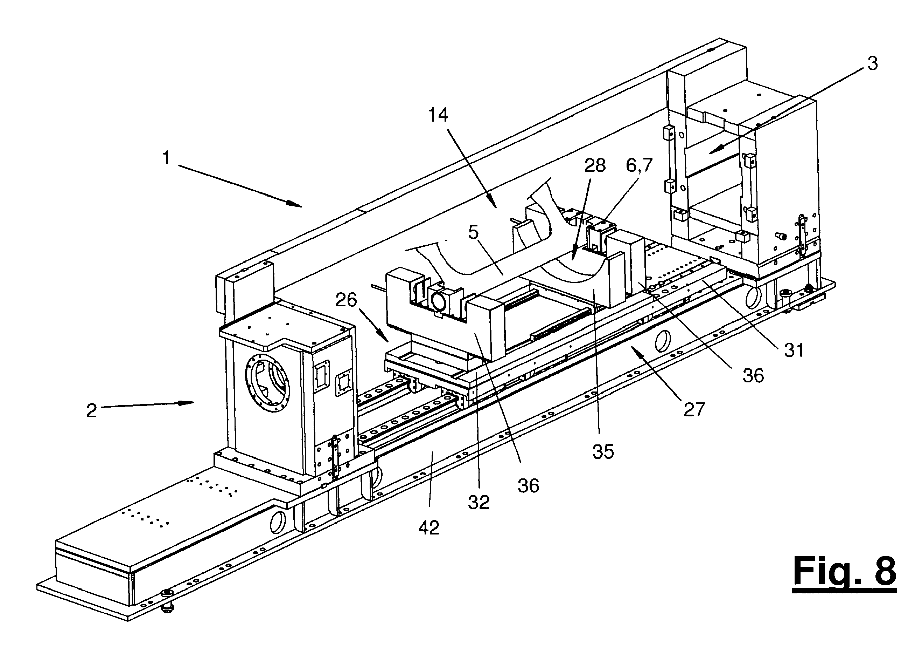

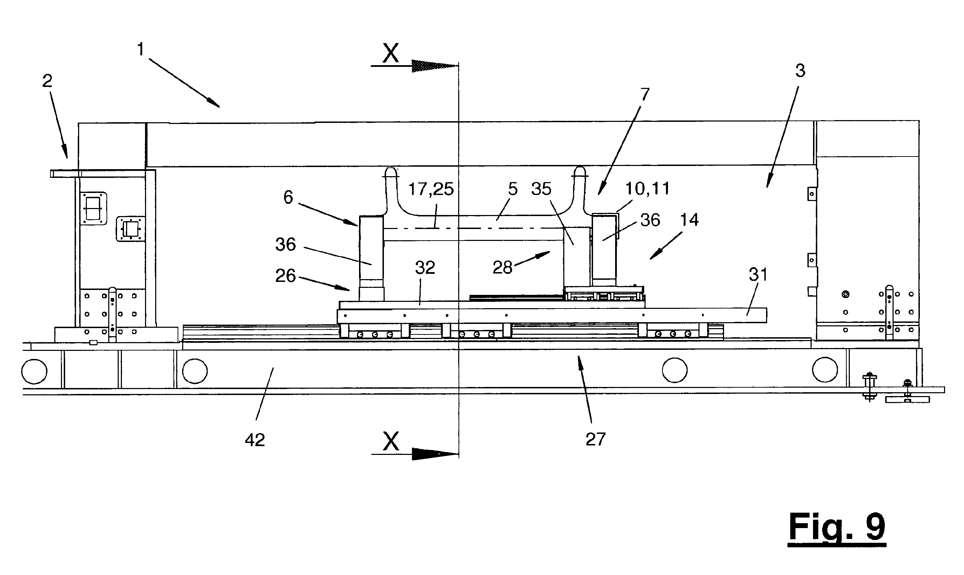

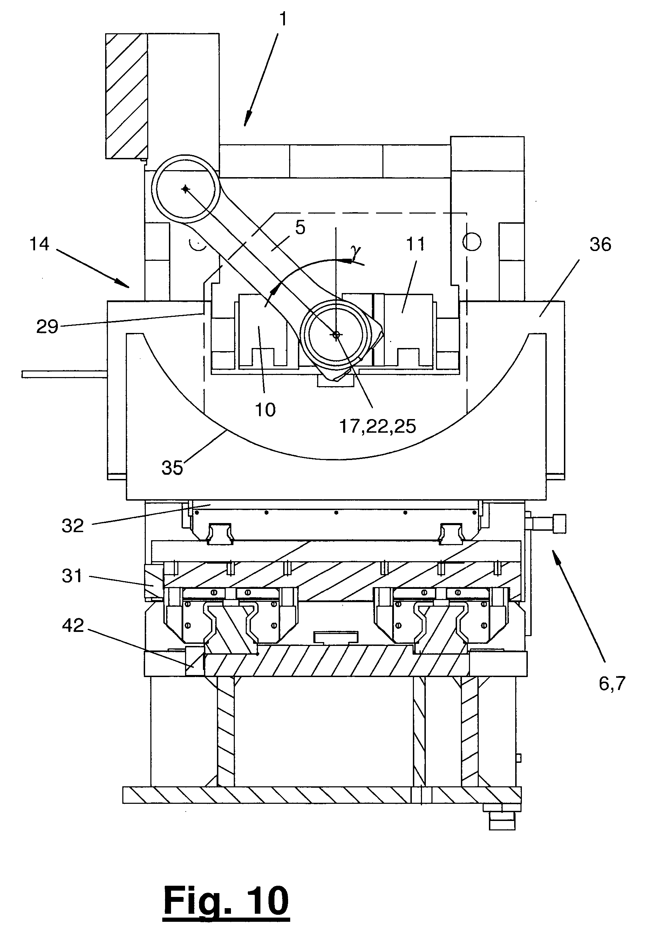

Figur 8 bis 10 zeigen eine dritte Variante der Pressschweißeinrichtung (1) mit einer Winkelverstellung (14), wobei Figur 10 einen Schnitt durch die Pressschweißeinrichtung (1) gemäß Schnittlinie X-X von Figur 9 darstellt.

Bei dieser Ausführungsform weist die Winkelverstellung (14) eine Stellvorrichtung (28) auf, die alternativ oder zusätzlich zu einer oder beiden Stellvorrichtungen (26,27) aus den vorbeschriebenen Ausführungsbeispielen angeordnet sein kann. In Figur 9 und 10 ist der Einfachheit halber nur die Stellvorrichtung (28) dargestellt.

Die Pressschweißeinrichtung (1) hat im wesentlichen die gleiche Ausbildung wie in den vorgenannten Ausführungsbeispielen und kann einen konventionellen Bauteilträger (6) aufweisen. Bei der gezeigten Ausführungsform kann die Aufbauplatte (32) starr oder wie in den vorhergehenden Ausführungsbeispielen schwenkbar um eine oder beide Stellachsen (23,24) auf dem Schlitten (31) angeordnet sein, wobei auch die Spannerträger (36) und die anderen Teile der Spanneinrichtung (7) stationär oder ggf. verstellbar auf der Aufbauplatte (32) angeordnet sind. Bei dieser Variante kann die Stellvorrichtung (28) das Basisbauteil (5) in der Spanneinrichtung (7) bei geöffneten Spannelementen (8,9,10,11) drehen und dadurch seine Drehlage und den Winkel γ gegenüber einer Ausgangsstellung und gegenüber dem Anbauteil (4) ändern. Die Stellachse (25) der Stellvorrichtung (28) kann mit der Bauteilachse (17) zusammenfallen, wobei auch der Achspunkt (22) auf der Stellachse (25) liegen kann.

Die Stellvorrichtung (28) für die Drehverstellung des Bauteils (5) kann ein schalenförmiges Gelenk (35) aufweisen, dessen Krümmungsmittelpunkt z.B. auf den Achsen (17,25) liegt. Das Stellelement (29) kann ein formschlüssiger Halter für das Bauteil (5) sein, der in Figur 10 gestrichelt angedeutet ist und der mit einem geeigneten Stellantrieb im schalenförmigen Gelenk (35) verschwenkt werden kann. Alternativ zur dargestellten Ausführungsform können auch die Spannerträger (36) auf einem schalenförmigen Gelenk (35) für eine Drehverstellung gelagert sein.

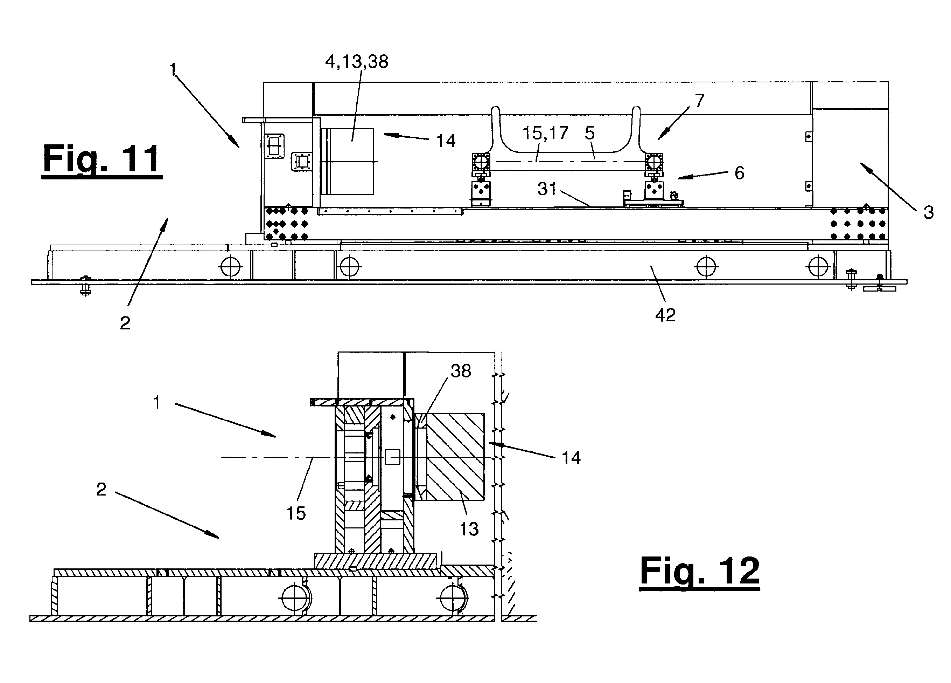

Figur 11 und 12 zeigen eine vierte Variante der Pressschweißeinrichtung (1) mit einer Winkelverstellung (14). In den vorbeschriebenen Ausführungsbeispielen wurde das Basisbauteil (5) zur Einstellung des gewünschten Raumwinkels gegenüber dem relativ ortsfest gehaltenen Anbauteil (4) verstellt. Figur 11 und 12 zeigen eine Variante, bei der das Anbauteil (4) im Winkel verstellt wird. Das Basisbauteil (5) kann in diesem Fall in konventioneller Weise angeordnet und gespannt sein, wobei die Bauteilachse (17) mit der Maschinenachse (15) fluchten oder in Parallellage angeordnet sein kann. Im gezeigten Ausführungsbeispiel wird die Lage des Basisbauteils (5) nicht verstellt. Alternativ kann eine zusätzliche Verstellung vorhanden sein.

Die Winkelverstellung (14) in der Ausführungsform von Figur 11 und 12 weist eine an der Spanneinrichtung (13) des Anbauteils (4) angeordnete Stellvorrichtung (38) auf, die das Anbauteil (4) für die letztendliche Schweißstellung schräg stellt. Die Stellvorrichtung (38) kann unterschiedlich ausgebildet sein. Sie kann z.B. zum Reibschweißen ein Kreuz- oder Kardangelenk zwischen dem Spannfutter (13) und der Antriebsachse sowie einen am Spannfutter (13) angreifenden externen Führungsring (nicht dargestellt) aufweisen, der exzentrisch zur Maschinenachse (15) angeordnet ist und das um die Maschinenachse (15) rotierend angetriebene Spannfutter (13) nebst Bauteil (4) (nicht dargestellt) in einer Taumelbewegung führt. Am Ende der Drehbewegung wird das Bauteil in einer vorgegebenen Winkelstellung zur Maschinenachse (15) positioniert und nimmt dabei die gewünschte Schrägstellung ein. Alternativ kann das Spannfutter (13) eine schräge Einspannung des Anbauteils (4) ermöglichen. Es ist außerdem möglich, das Spannfutter (13) schräg an der rotierenden Antriebsachse oder am Maschinengehäuse zu montieren und dadurch die Schrägstellung des Anbauteils (4) zu bewirken.

Diese Formen der Winkelverstellung (14) können bei Bedarf mit den vorbeschriebenen Ausführungsformen der Winkelverstellung (14) mit Angriff am Basisbauteil (5) kombiniert werden.

Beim Stauchvorgang schiebt die Staucheinrichtung (3) mit dem vorerwähnten und in Figur 19 dargestellten Stauchelement (39) das Basisbauteil (5) in Maschinenachsenrichtung gemäß des gezeigten Pfeils vor. Hierfür ist in allen vorbeschriebenen Ausführungsformen der besagte Schlitten (31) vorgesehen, der auf dem Maschinengestell (42) verschieblich auf Rollen- oder Gleitführungen oder dgl. beweglich gelagert ist. Wenn die Winkelverstellung (14) am Basisbauteil (5) angreift und dessen Winkellage gegenüber der Maschinenachse (15) verstellt, ändert sich auch die Winkellage gegenüber dem Stauchelement (39). Um dies auszugleichen, ist das Stauchelement (39) am freien Ende mit einem Stauchanschlag (40) versehen, der in einer kugelabschnittsförmigen oder rinnenförmigen Kalotte (41) schwenkbar gelagert ist und der auf das Bauteil (5) drückt. Über die Kalotte (41) werden die Winkelstellungen des Bauteils (5) gegenüber dem Stauchelement (39) ausgeglichen. Alternativ zur gezeigten Schalenform kann die Kalotte (41) auch als Kreuzgelenk oder dgl. ausgebildet sein.

In den gezeigten Ausführungsformen ist die Pressschweißeinrichtung (1) als sog. Einspindelmaschine ausgebildet. Wenn zwei Anbauteile (4) an gegenüberliegenden Seiten des Basisbauteils (5) angeschweißt werden sollen, ist ein Umspannen des Basisbauteils (5) und ggf. eine Umstellung der Winkelverstellung (14) nach der ersten Schweißung erforderlich. Auf ein solches Umspannen kann verzichtet werden, wenn die Winkelverstellung (14) auf das Spannfutter (13) des Anbauteils (4) einwirkt und wenn beidseits des Basisbauteils (5) zwei solche Plastifizierungseinrichtungen (2) mit kombinierten Staucheinrichtungen (3) angeordnet sind, die auch den Stauchhub gegenüber dem zentralen Basisbauteil (5) ausführen. Eine solche Konfiguration ist sowohl mit einer Lichtbogentreibeinrichtung, als auch mit einer Reibeinrichtung möglich.

Abwandlungen der gezeigten Ausführungsformen sind in verschiedener Weise möglich.
Bei der ersten Variante von Figur 1 bis 5 kann die Stellvorrichtung (27) mit der Höhenverstellung auf die Spannerträger (36) einwirken. Auch die andere Stellvorrichtung (26) kann abgewandelt werden und z.B. auf den hinteren Spannerträger (36) einwirken. Ferner können die Stellvorrichtungen (26,27) zusammengefasst oder unmittelbar benachbart sein, wobei z.B. eine solche Kombi-Stellvorrichtung (26,27) am hinteren und von der Schweissstelle distanzierten und entsprechend in sich beweglichen Spannerträger (36) angeordnet ist. In diesem Fall sind die Gelenke (12) an den vorderen Spannelementen (8,9) mehrachsig und z.B. als kugelschalenförmige Kalotten ausgebildet. Generell können die Spannergelenke (12) andere Gelenkformen und ggf. mehr als eine Gelenkachse aufweisen.

Bei der zweiten Variante von Figur 6 und 7 kann z.B. das zweite Gelenk (34) zwischen dem vorderen Spannerträger (36) und der Aufbauplatte (32) angeordnet sein, wobei der als Hubeinrichtung ausgebildete Stellantrieb (30) sich auf der Aufbauplatte (32) abstützt und den hinteren Spannerträger (36) hebt und senkt.

Das vorbeschriebene Schneiden von Stellachsen (23,24) in einem zentralen Achspunkt (22) des Basisbauteils (5) ist eine besonders bevorzugte Ausführung. Hiervon kann unter Inkaufnahme von gewissen Versätzen oder Verschiebungen bzw. Toleranzen abgewichen werden. Auch das vorbeschriebene Zusammenfallen von Achsen ist zwar vorteilhaft, aber nicht unbedingt notwendig. Auch hierbei können gewisse kleine Abweichungen toleriert werden.

Die Merkmale der vorbeschriebenen Ausführungsformen können in beliebiger Weise miteinander kombiniert und vertauscht werden. Ferner sind konstruktive Abwandlungen der Bestandteile der Pressschweißeinrichtung (1) und der Winkelverstellung (14) möglich.

### BEZUGSZEICHENLISTE

- 1: Pressschweißeinrichtung
- 2: Plastifizierungseinrichtung
- 3: Staucheinrichtung
- 4: Bauteil, Anbauteil
- 5: Bauteil, Basisbauteil
- 6: Bauteilhalter
- 7: Spanneinrichtung für Basisbauteil
- 8: Spannbacke
- 9: Spannbacke
- 10: Spannbacke
- 11: Spannbacke
- 12: Lager, Gelenk
- 13: Spanneinrichtung, Spannfutter
- 14: Winkelverstellung
- 15: Maschinenachse
- 16: Bauteilachse von Anbauteil
- 17: Bauteilachse von Basisbauteil
- 18: Kontaktfläche von Anbauteil
- 19: Kontaktfläche von Basisbauteil
- 20: Schweißebene, Nahtebene
- 21: Achspunkt am Anbauteil
- 22: Achspunkt am Basisbauteil
- 23: Stellachse
- 24: Stellachse
- 25: Stellachse
- 26: Stellvorrichtung für Schwenkverstellung
- 27: Stellvorrichtung für Kippverstellung
- 28: Stellvorrichtung für Drehverstellung
- 29: Stellelement, Keilanordnung, Anschlag
- 30: Stellantrieb
- 31: Schlitten
- 32: Aufbauplatte
- 33: Lager, Gelenk
- 34: Lager, Gelenk
- 35: Lager, Gelenk
- 36: Spannerträger
- 37: Spannerantrieb
- 38: Stellvorrichtung, Taumelscheibe
- 39: Stauchelement
- 40: Stauchanschlag
- 41: Kalotte
- 42: Gestell

- a: Schweißverkürzung am Anbauteil
- b: Schweißverkürzung am Basisbauteil

- α: Anstellwinkel zwischen Bauteilen
- β: Anstellwinkel zwischen Bauteilen
- γ: Anstellwinkel zwischen Bauteilen

## Patentansprüche

1. Pressschweißeinrichtung mit einer Plastifizierungseinrichtung (2) und einer Staucheinrichtung (3) sowie Spanneinrichtungen (7,13) für die mit einer gegenseitig abgewinkelten räumlichen Ausrichtung zu verschweißenden Bauteile (4,5), wobei der Raumwinkel über seine achsbezogenen Winkelkomponenten und über mehrere entsprechende Anstellwinkel α,β,γ einstellbar ist und wobei die Pressschweißeinrichtung (1) eine Winkelverstellung (14) zur gegenseitig abgewinkelten räumlichen Ausrichtung der zu verschweißenden Bauteile (4,5) um mehrere Anstellwinkel α, β, γ aufweist.

2. Pressschweißeinrichtung nach Anspruch 1, **dadurch gekennzeichnet, dass** die Plastifizierungseinrichtung (2) und die Staucheinrichtung (3) räumlich getrennt und an verschiedenen, insbesondere gegenüberliegenden Seiten der Bauteile (4,5) angeordnet sind.

3. Pressschweißeinrichtung nach Anspruch 1 oder 2, **dadurch gekennzeichnet, dass** die Winkelverstellung (14) mindestens eine Stellachse (23,24,25) und mindestens eine Stellvorrichtung (26,27,28,38) aufweist.

4. Pressschweißeinrichtung nach Anspruch 1, 2 oder 3, **dadurch gekennzeichnet, dass** die Stellvorrichtung (26,27,28,38) ein Stellelement (29) und einen manuell oder motorisch zu betätigenden Stellantrieb (30) aufweist.

5. Pressschweißeinrichtung nach einem der vorhergehenden Ansprüche, **dadurch gekennzeichnet, dass** die Stellvorrichtung (26,27,28) eine Einrichtung zur reproduzierbaren Positionierung aufweist.

6. Pressschweißeinrichtung nach einem der vorhergehenden Ansprüche, **dadurch gekennzeichnet, dass** die Plastifizierungseinrichtung (2) als Reibeinrichtung oder als Lichtbogentreibeinrichtung ausgebildet ist.

7. Pressschweißeinrichtung nach einem der vorhergehenden Ansprüche, **dadurch gekennzeichnet, dass** die Pressschweißeinrichtung (1) einen Bauteilhalter (6) für ein Basisbauteil (5) aufweist, das zwischen der Plastifizierungseinrichtung (2) und der Staucheinrichtung (3) angeordnet ist.

8. Pressschweißeinrichtung nach einem der vorhergehenden Ansprüche, **dadurch gekennzeichnet, dass** die Winkelverstellung (14) am Bauteilhalter (6) angeordnet ist.

9. Pressschweißeinrichtung nach einem der vorhergehenden Ansprüche, **dadurch gekennzeichnet, dass** der Bauteilhalter (6) mindestens einen Schlitten (31) und eine Aufbauplatte (32) mit mindestens einem Spannerträger (36) und einer Spanneinrichtung (7) für das Basisbauteil (5) aufweist.

10. Pressschweißeinrichtung nach einem der vorhergehenden Ansprüche, **dadurch gekennzeichnet, dass** die Winkelverstellung (14) eine Stellvorrichtung (26) zur seitlichen Schwenkverstellung des Basisbauteils (5) um eine aufrechte Stellachse (23) und/oder eine Stellvorrichtung (27) zur Kippverstellung des Basisbauteils (5) um eine quer liegende Stellachse (24) aufweist.

11. Pressschweißeinrichtung nach einem der vorhergehenden Ansprüche, **dadurch gekennzeichnet, dass** die Winkelverstellung (14) eine Stellvorrichtung (28) zur Drehverstellung der Spanneinrichtung (7) oder des Basisbauteils (5) um eine längsgerichtete Stellachse (25) aufweist.

12. Pressschweißeinrichtung nach einem der vorhergehenden Ansprüche, **dadurch gekennzeichnet, dass** zwischen dem Schlitten (31) und der Aufbauplatte (32) ein oder mehrere, insbesondere zwei oder drei Gelenke (33,34,35) angeordnet sind.

13. Pressschweißeinrichtung nach einem der vorhergehenden Ansprüche, **dadurch gekennzeichnet, dass** die Spanneinrichtung (7) mehrere Spannelemente (8,9,10,11) mit einem Gelenk (12) zur ein- oder mehrachsig beweglichen Lagerung am Spannerträger (36) aufweist.

14. Pressschweißeinrichtung nach einem der vorhergehenden Ansprüche, **dadurch gekennzeichnet, dass** die Winkelverstellung (14) eine an der Spanneinrichtung (13) des Anbauteils (4) angeordnete Stellvorrichtung (38) aufweist.

15. Verfahren zum Pressschweißen von Bauteilen (4,5) mit mit einer gegenseitig abgewinkelten räumlichen Ausrichtung, wobei die Bauteile (4,5) gespannt, plastifiziert und gestaucht werden, wobei der Raumwinkel über seine achsbezogenen Winkelkomponenten und über mehrere entsprechende Anstellwinkel α,β,γ eingestellt wird und wobei die zu verschweißenden Bauteile (4,5) außerhalb einer gemeinsamen Fluchtlinie ausgerichtet sind und mit einer Winkelverstellung (14) um mehrere Anstellwinkel α, β, γ gegenseitig abgewinkelt räumlich ausgerichtet werden.

## Claims

1. Pressure welding device comprising a plastifying device (2) and a compressing device (3) as well as tensioning devices (7, 13) for the components (4, 5) to be welded with a mutually angled away spatial alignment, wherein the spatial angle can be set by way of its axis-related angle components and by way of a number of corresponding setting angles α, β, γ and wherein the pressure welding device (1) has an angle adjuster (14) for the mutually angled away spatial alignment of the components (4, 5) to be welded by a number of setting angles α, β, γ.

2. Pressure welding device according to Claim 1, **characterized in that** the plastifying device (2) and the compressing device (3) are arranged spatially separately and on different, in particular opposite, sides of the components (4, 5).

3. Pressure welding device according to Claim 1 or 2, **characterized in that** the angle adjuster (14) has at least one adjusting axis (23, 24, 25) and at least one adjusting mechanism (26, 27, 28, 38).

4. Pressure welding device according to Claim 1, 2 or 3, **characterized in that** the adjusting mechanism (26, 27, 28, 38) has an adjusting element (29) and an adjusting drive (30) that can be actuated manually or by motor.

5. Pressure welding device according to one of the preceding claims, **characterized in that** the adjusting mechanism (26, 27, 28) has a device for reproducible positioning.

6. Pressure welding device according to one of the preceding claims, **characterized in that** the plastifying device (2) is formed as a friction device or as an arc driving device.

7. Pressure welding device according to one of the preceding claims, **characterized in that** the pressure welding device (1) has a component holder (6) for a base component (5), which is arranged between the plastifying device (2) and the compressing device (3).

8. Pressure welding device according to one of the preceding claims, **characterized in that** the angle adjuster (14) is arranged on the component holder (6).

9. Pressure welding device according to one of the preceding claims, **characterized in that** the component holder (6) has at least one slide (31) and a building plate (32) with at least one tensioner support (36) and a tensioning device (7) for the base component (5).

10. Pressure welding device according to one of the preceding claims, **characterized in that** the angle adjuster (14) has an adjusting mechanism (26) for the lateral pivoting adjustment of the base component (5) about an upright adjusting axis (23) and/or an adjusting mechanism (27) for the tilting adjustment of the base component (5) about a transversely lying adjusting axis (24).

11. Pressure welding device according to one of the preceding claims, **characterized in that** the angle adjuster (14) has an adjusting mechanism (28) for the rotational adjustment of the tensioning device (7) or of the base component (5) about a longitudinally directed adjusting axis (25).

12. Pressure welding device according to one of the preceding claims, **characterized in that** one or more, in particular two or three, joints (33, 34, 35) are arranged between the slide (31) and the building plate (32).

13. Pressure welding device according to one of the preceding claims, **characterized in that** the tensioning device (7) has a number of tensioning elements (8, 9, 10, 11) with a joint (12) for the single- or multi-axially movable mounting on the tensioner support (36).

14. Pressure welding device according to one of the preceding claims, **characterized in that** the angle adjuster (14) has an adjusting mechanism arranged on the tensioning device (13) of the add-on part (4).

15. Method for pressure welding components (4, 5) with a mutually angled away spatial alignment, the components (4, 5) being tensioned, plastified and compressed, wherein the spatial angle is set by way of its axis-related angle components and by way of a number of corresponding setting angles α, β, γ and wherein the components (4, 5) to be welded are aligned outside a common line of alignment and are spatially aligned by an angle adjuster (14) so as to be mutually angled away by a number of setting angles α, β, γ.

## Revendications

1. Dispositif de soudage sous pression comprenant un dispositif de plastification (2) et un dispositif de refoulement (3) ainsi que des dispositifs de serrage (7, 13) pour les composants à souder (4, 5) avec une orientation spatiale inclinée l'un par rapport à l'autre, l'angle spatial pouvant être ajusté par le biais de ses composantes angulaires rapportées à l'axe et par le biais de plusieurs angles d'inclinaison correspondants α, β, γ et le dispositif de soudage sous pression (1) présentant un réglage angulaire (14) pour l'orientation spatiale inclinée l'un par rapport à l'autre des composants à souder (4, 5) suivant plusieurs angles d'inclinaison α, β, γ.

2. Dispositif de soudage sous pression selon la revendication 1, **caractérisé en ce que** le dispositif de plastification (2) et le dispositif de refoulement (3) sont disposés de manière séparée spatialement et sur des côtés différents, notamment opposés, des composants (4, 5).

3. Dispositif de soudage sous pression selon la revendication 1 ou 2, **caractérisé en ce que** le réglage angulaire (14) présente au moins un axe de réglage (23, 24, 25) et au moins un dispositif de réglage (26, 27, 28, 38).

4. Dispositif de soudage sous pression selon la revendication 1, 2 ou 3, **caractérisé en ce que** le dispositif de réglage (26, 27, 28, 38) présente un élément de réglage (29) et un entraînement de réglage (30) pouvant être actionné manuellement ou par moteur.

5. Dispositif de soudage sous pression selon l'une quelconque des revendications précédentes, **caractérisé en ce que** le dispositif de réglage (26, 27, 28) présente un dispositif pour un positionnement reproductible.

6. Dispositif de soudage sous pression selon l'une quelconque des revendications précédentes, **caractérisé en ce que** le dispositif de plastification (2) est réalisé sous forme de dispositif à friction ou sous forme de dispositif de commande à arc électrique.

7. Dispositif de soudage sous pression selon l'une quelconque des revendications précédentes, **caractérisé en ce que** le dispositif de soudage sous pression (1) présente un dispositif de retenue de composant (6) pour un composant de base (5) qui est disposé entre le dispositif de plastification (2) et le dispositif de refoulement (3).

8. Dispositif de soudage sous pression selon l'une quelconque des revendications précédentes, **caractérisé en ce que** le réglage angulaire (14) est disposé au niveau du dispositif de retenue de composant (6).

9. Dispositif de soudage sous pression selon l'une quelconque des revendications précédentes, **caractérisé en ce que** le dispositif de retenue de composant (6) présente au moins un chariot (31) et une plaque de montage (32) avec au moins un dispositif de support de pince (36) et un dispositif de serrage (7) pour le composant de base (5).

10. Dispositif de soudage sous pression selon l'une quelconque des revendications précédentes, **caractérisé en ce que** le réglage angulaire (14) présente un dispositif de réglage (26) pour le réglage par pivotement latéral du composant de base (5) autour d'un axe de réglage vertical (23) et/ou un dispositif de réglage (27) pour le réglage par basculement du composant de base (5) autour d'un axe de réglage situé transversalement (24).

11. Dispositif de soudage sous pression selon l'une quelconque des revendications précédentes, **caractérisé en ce que** le réglage angulaire (14) présente un dispositif de réglage (28) pour le réglage par rotation du dispositif de serrage (7) ou du composant de base (5) autour d'un axe de réglage (25) orienté longitudinalement.

12. Dispositif de soudage sous pression selon l'une quelconque des revendications précédentes, **caractérisé en ce qu'**entre le chariot (31) et la plaque de montage (32) sont disposées une ou plusieurs, notamment deux ou trois, articulations (33, 34, 35).

13. Dispositif de soudage sous pression selon l'une quelconque des revendications précédentes, **caractérisé en ce que** le dispositif de serrage (7) présente plusieurs éléments de serrage (8, 9, 10, 11) avec une articulation (12) pour le support déplaçable suivant un ou plusieurs axes au niveau du dispositif de support de pince (36).

14. Dispositif de soudage sous pression selon l'une quelconque des revendications précédentes, **caractérisé en ce que** le réglage angulaire (14) présente un dispositif de réglage (38) disposé au niveau du dispositif de serrage (13) de la pièce rapportée (4).

15. Procédé de soudage sous pression de composants (4, 5) ayant une orientation spatiale inclinée l'un par rapport à l'autre, les composants (4, 5) étant serrés, plastifiés et refoulés, l'angle spatial étant ajusté par le biais de ses composantes angulaires rapportées à l'axe et par le biais de plusieurs angles d'inclinaison correspondants α, β, γ et les composants à souder (4, 5) étant orientés à l'extérieur d'une ligne d'affleurement commune et étant orientés spatialement suivant une inclinaison mutuelle avec un réglage angulaire (14) suivant plusieurs angles d'inclinaison α, β, γ.
